(19) Europäisches Patentamt / European Patent Office / Office européen des brevets

(11) **EP 3 446 545 B1**

(12) **EUROPEAN PATENT SPECIFICATION**

(45) Date of publication and mention of the grant of the patent:
**24.03.2021 Bulletin 2021/12**

(21) Application number: **17717509.8**

(22) Date of filing: **04.04.2017**

(51) Int Cl.:
**H05B 7/152** *(2006.01)*     **H05B 7/09** *(2006.01)*

(86) International application number:
**PCT/IB2017/051903**

(87) International publication number:
**WO 2017/182902 (26.10.2017 Gazette 2017/43)**

(54) **AN ARC SMELTING SYSTEM AND METHOD OF MONITORING THE LENGTH OF AN ELECTRODE IN SAID SYSTEM**

LICHTBOGENSCHMELZSYSTEM UND VERFAHREN ZUR ÜBERWACHUNG DER LÄNGE EINER ELEKTRODE IN DIESEM SYSTEM

SYSTÈME DE FUSION À L'ARC ET PROCÉDÉ DE SURVEILLANCE DE LA LONGUEUR D'UNE ÉLECTRODE DANS LEDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2016 ZA 201602781**

(43) Date of publication of application:
**27.02.2019 Bulletin 2019/09**

(73) Proprietor: **Glencore Operations South Africa (Proprietary) Limited**
**2196 Johannesburg (ZA)**

(72) Inventor: **LE ROUX, Daniel Jacues**
**0250 Brits (ZA)**

(74) Representative: **Hylarides, Paul Jacques et al**
**Arnold & Siedsma**
**Bezuidenhoutseweg 57**
**2594 AC Den Haag (NL)**

(56) References cited:
CN-B- 101 720 146     CN-U- 204 679 109
JP-A- H 038 290     JP-A- H06 260 281
JP-A- S57 130 398     KR-A- 20140 007 083

**Description**

## BACKGROUND OF THE INVENTION

THIS invention relates to an arc smelting system and a method of identifying/determining a change in electrode length of an electrode which forms part of the arc smelting system.

In the smelting process, a carbon based electrode is submerged in the burden with a tip of the electrode at an unknown depth. The purpose of the electrodes is to conduct electricity and provide the necessary energy required by the process. One or more electrodes can be used in the process. The electrodes can either be pre-manufactured and replaced as needed or continuously formed (known as Söderberg electrodes). Effective replenishment of the electrodes is a critical function and affects the stability and efficiency of the production process (electrodes are carbon based and therefore also participate in the reaction). An ideal electrode length exists which not only ensures effective and efficient smelting, but also continuance of the electrode forming process by maintaining appropriate average electrode currents (in the case of Söderberg electrodes).

Maintaining optimal electrode lengths have proven to be one of the most difficult (and potentially performance inhibiting) activities faced daily by production personnel. Due to the nature of the electrical circuit employed, it is difficult to determine electrode lengths by observing "dashboard" parameters such as electrode current and resistance. Only in extreme cases of electrode breakages (i.e. shortening of the electrode), will these parameters give an indication of the occurrence, but using them to maintain lengths have however proven to be a futile exercise. Various attempts have been made at solving this problem, with none of them providing an acceptable solution (typically either due to the financial implications, modifications needed to be made to existing installations and/or the accuracy of the method).

Numerous methods are based on measuring the weight of the electrode. These methods are based on the fact that a longer electrode will necessarily weigh more than a shorter electrode and accordingly the exact length can be calculated assuming a certain electrode mass density. Since its advent, the method has also been improved upon by eliminating potential sources of variability. Initially the weight of the entire electrode column was used. This method was improved on by eliminating weight disturbances arising from components associated with the electrode mantle (flexible bus tubes, friction with roof seals, water flow etc.), by placing load cells beneath the slipping clamps, thereby isolating the weight of the electrode (steel casings, paste and baked electrode section) (Sidorski, E., 2006. *Arc furnace electrode length determination.* United States of America, Patent No. 7095777). A further alteration of this method is to compensate for plasma forces by taking into account electrode currents (Allen, C. & Motter, J., 1975. System for determining electrode length. United Sates of America, Patent No. US3872231).

An alternative method is to make use of a consumption model. When used in conjunction with daily slipping values the theoretical electrode length can be determined. Mintek uses such a method to determine electrode lengths (their consumption model is based on power input) (Hockaday, C., 2015. Electrode length determinator [Interview] (29 December 2015)). The accuracy of the model is obviously dependent on the accuracy of consumption data. Consumption varies with excess carbon conditions, slag regime etc., making this method very inaccurate. This method is also incapable of detecting electrode breakages.

A patent exists where the length is determined using the potential difference between two points on the furnace shell (one point being as close as possible to the electrode being measured) and the electrode current (Kalgraf, K., Morkesdal, G. & Tronstad, R., 2001. *Method for determination of the tip position of consumable electrodes used in electric smelting furnaces.* United States of America, Patent No. 6178191) Document JP S57 130398 A discloses a method of monitoring the length of an electrode according to the prior art. Document CN 101720146 B discloses a control method of the embedding depth of an electrode into an ore-smelting electric furnace according to the prior art.

The Inventor wishes to address at least some of the problems identified above.

## SUMMARY OF THE INVENTION

In accordance with a first aspect of the invention there is provided a method of monitoring, or obtaining an indication of, a length of an electrode of an arc smelting system, wherein the method includes:

measuring the current in/running through the electrode during operation (i.e. during an arc smelting operation);
determining a variation of the measured current over a period of time;
deriving a current variation value which is indicative of the electrode length, wherein the derivation of the current variation value is based on at least the determined variation of current over the period of time.

The electrode is typically elongated, e.g. it may have an elongate body.

The method may more specifically be for monitoring the lengths of, or obtaining an indication of the lengths of two, preferably three, electrodes of an arc smelting system. The method may then include:

the measuring the current in each electrode during operation;
determining a variation of the measured current for each electrode over a period of time;
deriving a current variation value for each electrode, wherein the derivation of the current variation value is based on at least the determined variation of current for the particular electrode over the period of time.

The method may include comparing, preferably by using a processor, the derived current variation value with a reference current variation value, in order to obtain an indication of the electrode length. The method may include determining the reference current variation value. The reference current variation value may be a current variation value for an electrode with a known length. The reference current variation value is hereinafter referred to as the "setpoint value".

The method, in accordance with the first aspect of the invention, may more specifically include measuring the current in the electrode at specific time instances/intervals over a period of time. The method, in accordance with the first aspect of the invention, may then further include determining, preferably by using a processor, the variation in current by calculating the difference in current measured at successive time instances/intervals.

The derived current variation value, in accordance with the first aspect of the invention, may be calculated by using the following formula:

$$Ivar = \frac{\sum_{i=0}^{n} |I_{i+1} - I_i|}{(t_n - t_0)}$$

wherein:

Ivar is the derived current variation value;
$n$ is the total amount of data points from which the derived current variation value is to be calculated;
$I_i$ is the measured current at time interval/instance i; and
$t_n$-$t_0$ refers to the time span/period over which the data points were recorded.

It should be clear that "data points" refer to the time instances when the current in the electrode was measured.

The determining of the variation of the measured current may be implemented by a processor. The processor may form part of a computing arrangement such as a computer, or it may be a programmable logic controller (PLC).

The derived current variation value, in accordance with the first aspect of the invention, may be calculated by a processor. The processor may form part of a computing arrangement such as a computer, or it may be a programmable logic controller (PLC).

The determining of the variation of the measured current and the calculation of the derived current variation value may be implemented by the same processor.

The arc smelting system mentioned above may be an arc smelter. The arc smelter may be a ferrochrome smelter.

The arc smelting system may be an electric arc furnace.

The method may include not deriving any current variation values during a time period/instance when a tap change at a transformer, which is operatively connected to the electrode, occurs. More specifically, the method may include not deriving a current variation value during a time period when a tap change at a transformer, which is operatively connected to the electrode, is occurring.

In accordance with a second aspect of the invention there is provided an arc smelting system which includes:

at least one electrode;
a current measuring arrangement which is configured to measure the current in the electrode during operation; and
a processing arrangement which is configured to

determine a variation of the current in the electrode measured by the current measuring arrangement over a period of time, and
derive a current variation value which is indicative of the electrode length, wherein the derivation of the current variation value is based on at least the determined variation of current over the period of time.

The electrode is typically elongated, e.g. it has an elongate body.

The system may include two, preferably three, electrodes. The current measuring arrangement may be configured to measure the current in each electrode during operation. Alternatively, the system may include three current measuring arrangements, one for each electrode.

The processing arrangement may be configured to

determine a variation of the measured current for each electrode over a period of time; and
derive a current variation value for each electrode which is indicative of the length of the electrode, wherein the derivation of the current variation value is based on at least the determined variation of current over the period of time.

The processing arrangement may be configured to identify/determine a change in electrode length of the electrode by comparing the derived current variation value with a reference current variation value ("setpoint value"). The reference current variation value ("setpoint value") may be a current variation value for an electrode with a known length. The processing arrangement may be configured to determine a reference current variation value ("setpoint value"). The reference current variation value ("setpoint value") may be a current variation value for an electrode with a known length.

In accordance with the second aspect of the invention, the current measuring arrangement may be configured to measure the current in the electrode at specific time instances/intervals over a period of time. The processing arrangement may then be configured to determine the difference/amount of variation in current by calculating the difference in current measured at successive time instances/intervals.

The current variation value, in accordance with the third or fourth aspect of the invention, may be calculated by using the following formula:

$$Ivar = \frac{\sum_{i=0}^{n} |I_{i+1} - I_i|}{(t_n - t_0)}$$

wherein:

$Ivar$ is the derived current variation value;
$n$ is the total amount of data points from which the derived current variation value is to be calculated;
$I_i$ is the measured current at time interval/instance $i$; and
$t_n$-$t_0$ refers to the time span/period over which the data points were recorded.

The processing arrangement may include a processor. The processing arrangement may include a computing arrangement such as a computer, and/or it may include a programmable logic controller (PLC).
The arc smelting system, in accordance with the second aspect of the invention, may be an arc smelter. The arc smelter may be a ferrochrome smelter
The arc smelting system, in accordance with the second aspect of the invention, may be an electric arc furnace.

## BRIEF DESCRIPTION OF THE DRAWINGS

The invention will now be described, by way of example, with reference to the accompanying diagrammatic drawings. In the drawings:

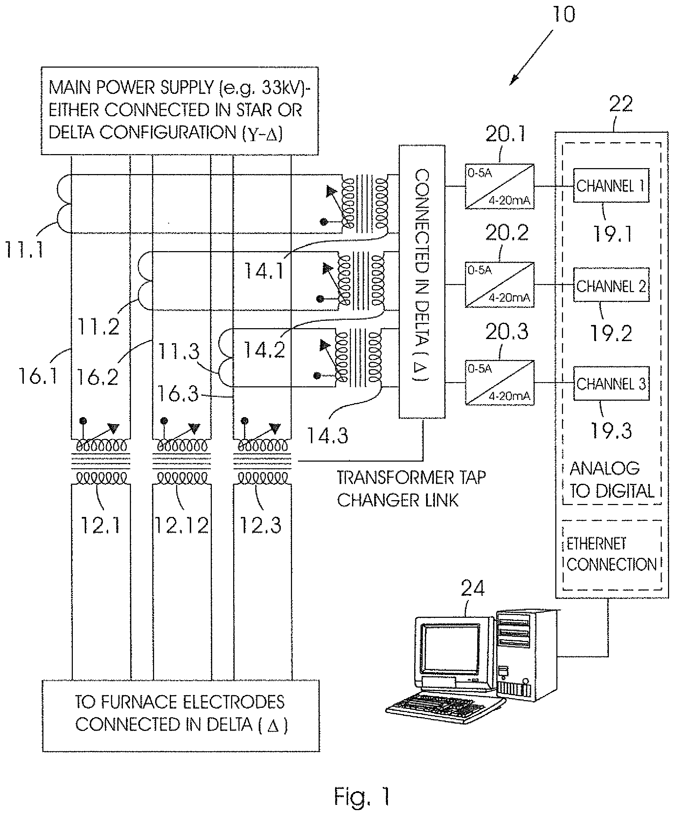

**Figure 1**      shows a schematic layout of a hardware configuration of an arc smelting system in accordance with the invention;

**Figure 2a**      shows a graphical representation of a calculated current flowing through an arc smelting system (i.e. a so-called electrode current) over a period of time, for a 2.3m electrode;

**Figure 2b**      shows a graphical representation of a calculated current flowing through an arc smelting system (i.e. a so-called electrode current) over a period of time, for a 3.0m electrode;

**Figure 3a**      shows a graphical representation of resistance versus current variation through a first electrode of an arc smelting system;

**Figure 3b**      shows a graphical representation of resistance versus current variation through a second electrode of an arc smelting system;

**Figure 3c**      shows a graphical representation of resistance versus current variation through a third electrode of an arc smelting system;

**Figure 4a**      shows a graphical representation of a change in current variation in a first electrode ($\Delta I_{var1}$) as a function of change in the amount of tap changes ($\Delta$TX312);

**Figure 4b**      shows a graphical representation of a change in current variation in a second electrode ($\Delta I_{var2}$) as a function of change in the amount of tap changes ($\Delta$TX123);

**Figure 4c**      shows a graphical representation of a change in current variation in a third electrode ($\Delta I_{var3}$) as a function of change in the amount of tap changes ($\Delta$TX231);

| **Figure 5a** | shows a graphical representation of a time-based comparison between a normal current variation ($I_{var1}$) and a reference state current variation model ($I_{var1\_17}$) for electrode 1; |
| **Figure 5b** | shows a graphical representation of the effect of tap changes on current variation; |
| **Figure 5c** | shows a graphical representation of a functioning of a reference state current variation model; |
| **Figure 6a** | shows a graphical representation of the impact tap changes have on an absolute difference between subsequent electrode current values ($|I_{i+1}-I_i|$); and |
| **Figure 6b** | shows a graphical representation of the impact tap changes have on an absolute difference between subsequent electrode current values $(|I_{i+1}-I_i|)$; when calculations are not made during tap changes. |

## DESCRIPTION OF PREFERRED EMBODIMENTS

Reference is again made to the drawbacks mentioned in the background of the invention. Due to the absence of anything more accurate, average resistance and current readings have been used to gauge electrode lengths, even though it was not accurate. From a control point of view, slipping rates were adjusted to maintain certain average electrode currents or resistance set points. In times of furnace instability, it was not uncommon for production personnel to melt down the furnace bed to expose the electrode tips and visually measure the lengths, more often than not being surprised by the actual lengths.

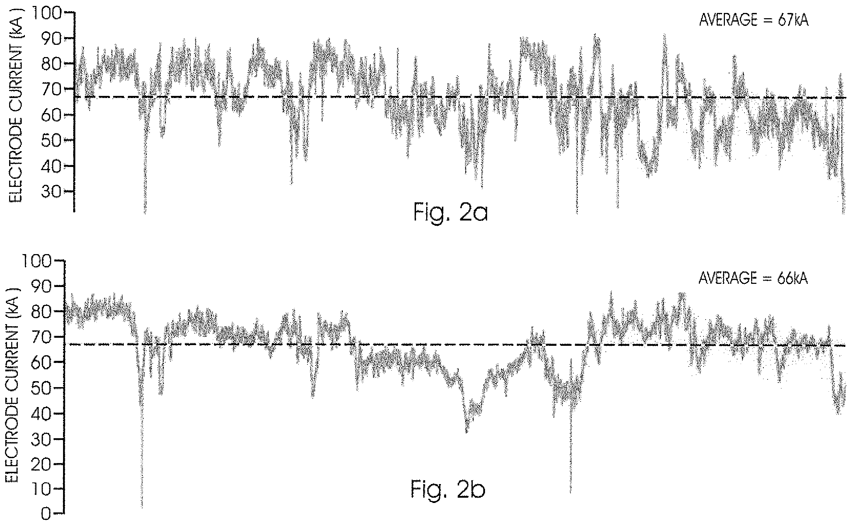

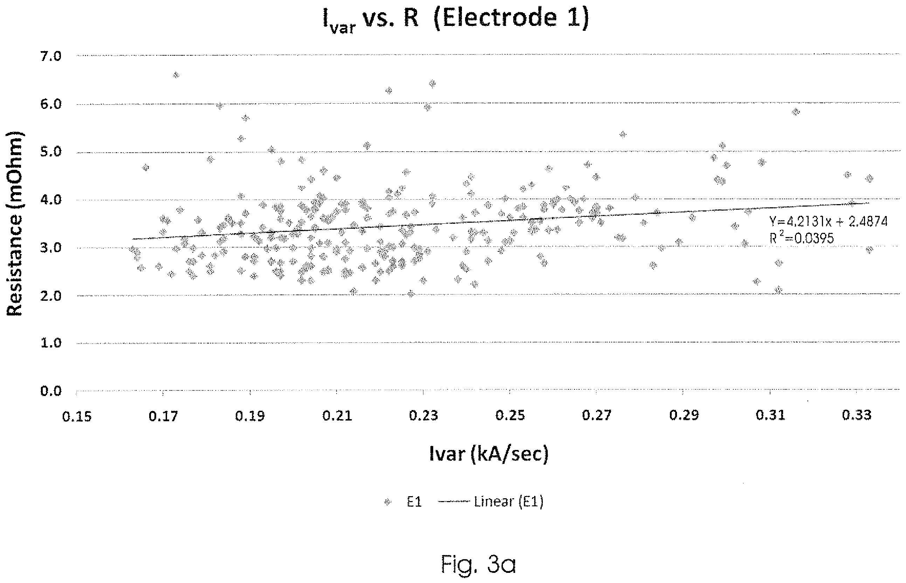

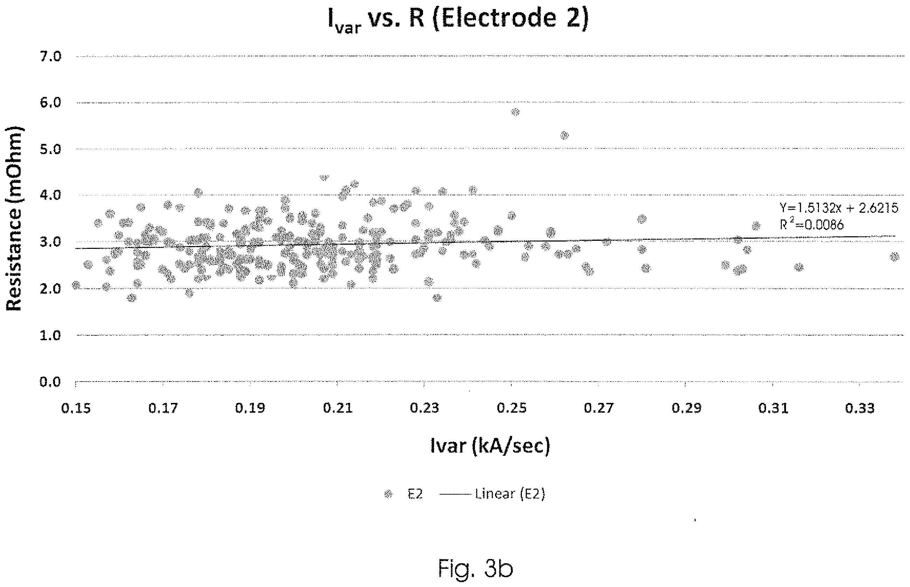

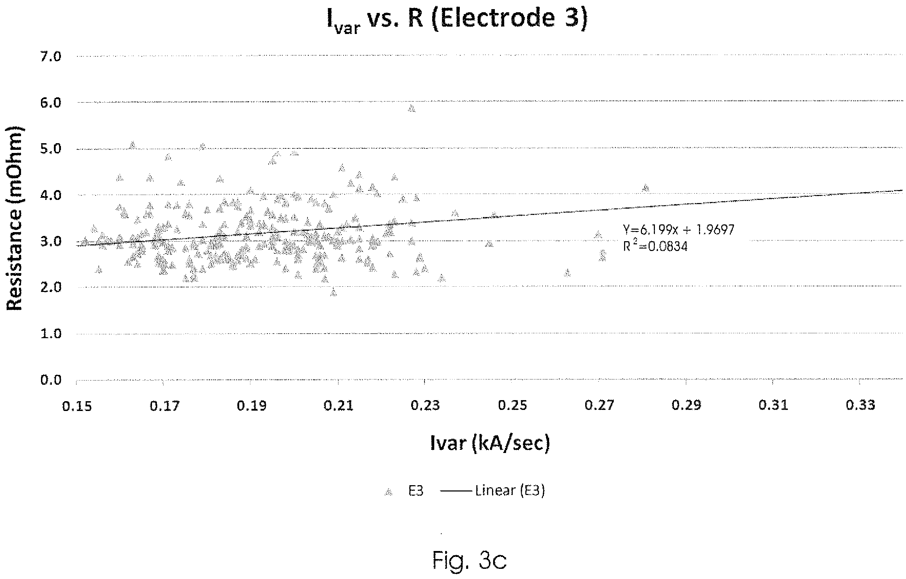

From these experiences, the observation has been made that although the average current in the electrodes are the same, the way in which the particular average is reached differs. It was found that a longer electrode tends to operate in a more stable manner when observing electrode current with only minor fluctuations in the value. Shorter electrodes on the contrary exhibit much more volatility. Figures 2a and 2b provide an illustration of this occurrence. Furthermore, it has also found that there is no real relationship between current variation and average current/resistance (see Figures 3a-c).

The present invention utilises the volatility aspect mentioned above, in order to monitor the lengths of electrodes in an arc smelting system.

The present invention therefore relates to an arc smelting system, more specifically a ferrochrome smelter, which is configured to monitor the length of one or more electrodes used in the smelting process. In order to monitor/obtain an indication of the length of the electrodes, a specific algorithm, which takes into account the variation of current through the electrode over time, is implemented by a processing arrangement, in order to calculate a specific current variation value (which may also be referred to as the "electrode current variation").

The calculated current variation value is then compared against a setpoint value. The setpoint valuetypically refers to an ideal/optimal value for the calculated current variation value when the electrode is at a specific/desired length. The setpoint valueis typically obtained by using the system to calculate the current variation value when the length of the electrode is known (e.g. when a new electrode is first used in the smelting system or after the length of an electrode has been physically measured). Once the setpoint valuehas been calculated, this value can be compared against any calculated current variation values which are calculated in the future during the operation of the smelting system.

In the drawings, reference numeral 10 refers generally to an arc smelting system (e.g. a ferrochrome smelter) in accordance with the invention. Three single phase transformers 12.1-12.3 are used to deliver power to three electrodes located in a submerged-arc furnace of the system 10. It will however be appreciated that any number of electrodes can be used. Each electrode is typically elongated (i.e. it has an elongate body).

Multi ratio current transformers 14.1-14.3 are operatively connected on the primary side of furnace transformers 12.1-12.3 using reference current transformers 11.1 - 11.3. This configuration of transformers (11.1 - 11.3 and 14.1 - 14.3) allows for the conversion of primary currents at 16.1 - 16.3 to an indication of electrode currents.

Transformers 12.1 - 12.3 and 14.1 - 14.3 are multi-tap transformers. Tap positions on transformers 12.1 - 12.3 and 14.1 - 14.3 are controlled in unison with a motor-driven tap changer.

The current transformers 14.1-14.3 are connected in a delta configuration (which may be similar to the connection between the electrodes).

The current transformers 14.1-14.3 are each connected to a current transducer (e.g. 4-20mA) 20.1-20.3 which is configured to generate an analogue signal which is used as an input to a programmable logic controller (PLC) 22. More specifically, the transducers 20.1-20.3 are each connected to an input channel 19.1-19.3 of the PLC 22. A digital output of the PLC 22 is connected to a computer 24 (or other computing unit), e.g. via an Ethernet connection.

It will be appreciated that the multi-ratio current transformers 14.1-14.3, reference current transformers 11.1 - 11.3 and associated transducers 20.1-20.3 together form a current measuring arrangement which is configured to measure the current in the electrodes during operation and relay the details thereof to the PLC 22 for further processing. It will be appreciated that alternative current measuring arrangements could be implemented in order to measure the current in the electrodes. Furthermore, the current measuring arrangements could be connected directly to a computer instead of a PLC.

Either the PLC or the computer 24 can then be used in order to calculate the said current variation value for each electrode. The PLC 22 and/or computer 24 can therefore effectively form a processing arrangement which is configured to calculate the said current variation value for each electrode and to monitor/obtain an indication of the length of the electrodes, based on the said calculation.

The current variation value for each electrode can be calculated by using the following formula:

$$Ivar = \frac{\sum_{i=0}^{n} |I_{i+1} - I_i|}{(t_n - t_0)} \tag{1}$$

wherein:

$Ivar$ is the derived/calculated current variation value;
$n$ is the total amount of data points from which the derived current variation value is to be calculated;
$I_i$ is the measured current at time interval/instance $i$; and
$t_n$-$t_0$ refers to the time span/period over which the data points were recorded.

From the above equation it can be noted that the current variation value is time based. Furthermore, the absolute differences are first calculated and then divided by the total time in which the data collection transpired. This method may typically be applicable for various sampling methods, which depend on the type of PLC used. Averaging instantaneous values will typically only be accurate when sampling at a fixed rate.

Once the current variation value for a particular electrode has been calculated, the PLC 22 or the computer 24 derives an indication of the electrode length by comparing the calculated current variation value with a setpoint value. As mentioned above, the setpoint value can typically be obtained by calculating a current variation value in the same manner when the electrode length is known, e.g. at the beginning when a new electrode is used in the system 10. This reference value may differ from system to system as well as from PLC to PLC. It is advised that in determining a reference value that data measured over a time will be used and optimized for a specific system 10.

In the case of a short electrode, due to the volatility of the current variation value, the numerator of the equation becomes a large value and subsequently also the current variation value.

### Experiment

Investigation Methodology

The following investigation methodology was followed for data collection, analysis and results verification. In this experiment, the effect of electrode length was eliminated by assuming the length remains constant from one 30 minute period to the next. The effect of tap changes on current variation was then analysed from one 30min interval to the next.

**Data Collection**

Data from a specific furnace was obtained for a period of 13 days. For every 30 minutes in this time interval (624 data sets in total) the following data were captured:

- Current variation for each electrode; and
- The amount of tap changes per transformer.

**Data Analysis**

A filter was placed on an average power input of the system (e.g. a 40MW filter) to eliminate periods where the furnace was off, since it could potentially have a significant effect on the current variation value.

- Current variation on electrode E1 was correlated to the sum of tap changes at Transformer 3 and 1 (Denoted as TX312).
- Current variation on electrode E2 was correlated to the sum of tap changes at Transformer 1 and 2 (Denoted as TX123).
- Current variation on electrode E3 was correlated to the sum of tap changes at Transformer 2 and 3 (Denoted as TX231).

**Model Verification**

From the data analysis a straight-line regression fit (see equation 2 below) was determined. The line passes through the origin, since no change in the factor being investigated will necessarily result in no change to the current variation:

*Equation 2: Correlating change in Ivar to change in a specific factor*

$$\Delta I_{Var} = m\Delta x \qquad (2)$$

Where:

AI$_{Var}$ Change in current variation (kA/s);
m is a slope of regression line; and
$\Delta$x is a change in factor (i.e. the number/sum of the tap changes).

By defining a reference state "0" it follows:

$$I_{Var,i} - I_{Var,0} = m(x_i - x_0) \qquad (3)$$

*Equation 4: Calculating reference state current variation*

$$I_{Var,0} = I_{Var,i} - m(x_i - x_0) \qquad (4)$$

For any instance (*i*) the actual current variation value can now be adjusted, using the known relationship between current variation and the number/sum of the tap changes, to represent the "adjusted current variation value".
If I$_{Var,0}$ exhibit less fluctuations from one period to the next, it means it is consistently giving a more reliable result. The degree of fluctuation is calculated using the following formula (sum of absolute changes between intervals):

*Equation 5: Calculation of Ivar fluctuation to compare models*

$$Ivar_{fluctuation} = \sum_{i=0}^{n} |Ivar_{i+1} - Ivar_i| \qquad (5)$$

The range of the current variation (difference between maximum and minimum value for a specific interval) was also used as an additional measure of accuracy. The smaller the range, the narrower the band within which the value was fluctuating.

*Equation 6: Calculation of Ivar range for a specific interval*

$$Range = Ivar_{max} - Ivar_{min} \qquad (6)$$

Results

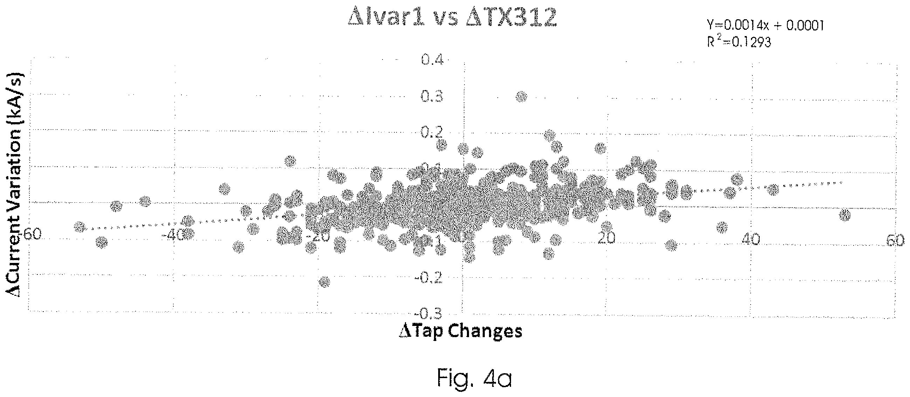

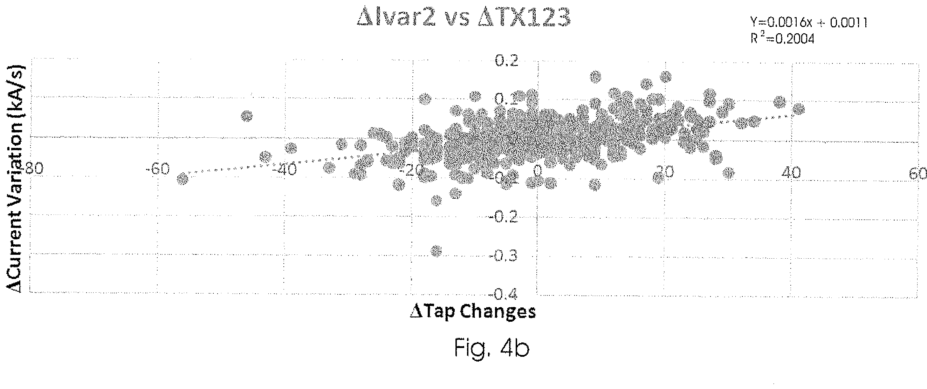

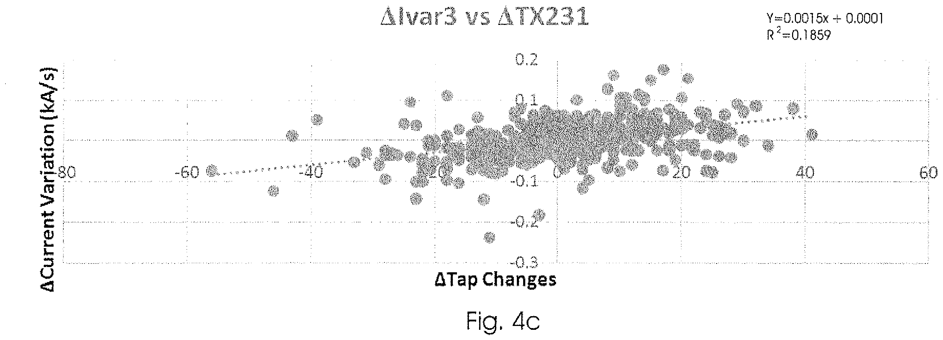

As illustrated in Figures 4a-c, the results indicated that there is a correlation between the amount of tap changes being made and the fluctuations in the current variation value. As shown in these figures, a straight-line regression fit was obtained for each electrode (see the dotted lines and corresponding equations in the top right corners of the graphs). In this regard, a good correlation can be noted at all three electrodes, with very similar slopes in all instances.

The correlation between the change in total tap changes and change in current variation can be used to derive an improved model (referred to as the "adjusted state current variation model"). When forcing the individual regression lines through the origin, the accompanying slopes are 0.0014, 0.0016 and 0.0015 respectively, which indicates that all three current variations react similar to changes in the amount of tap changes per interval. For this experiment, it was decided to make use of the average of all three electrodes (i.e. 0.0015).

For comparison sake, the aim was to have the adjusted current variation value as close as possible to what we have become accustomed to. For that reason the average amount of tap changes per 30min interval (per transformer pair) was first calculated for the data collected and served as the reference state. The average amount of tap changes was calculated as 17 and was used to substitute $x_0$. If, for example, the total amount of tap changes equated to 40, then $\Delta x$ would be 23. Equation 4 was then used to calculate the adjusted current variation value (on a 30min basis) for all the data collected. Table 1 below summarizes the daily averages. With regards to equation 4, and keeping in mind that an increased amount of tap changes result in a higher calculated I*var* value, the mdX term adjusts the actual $I_{var}$ value to an "adjusted $I_{var}$" value (i.e, what would the $I_{var}$ have been, had there only been 17 tap changes). The second and third columns for each electrode provide an indication of fluctuations observed (calculated using equations 5 and 6, respectively.

Table 1: Current Variation: Normal current variation value (i.e. Ivar as calculated by equation 1) versus the adjusted state current variation model

| Date | Electrode1 | | | | | | Electrode2 | | | | | | Electrode3 | | | | | |
|---|---|---|---|---|---|---|---|---|---|---|---|---|---|---|---|---|---|---|
| | Normal | | | Reference | | | Normal | | | Reference | | | Normal | | | Reference | | |
| | Ivar1_Avg | Ivar1_Var | Ivar1_Range | Ivar1_17Avg | Ivar1_17Var | Ivar1_17Range | Ivar2_Avg | Ivar2_Var | Ivar2_Range | Ivar2_17Avg | Ivar2_17Var | Ivar2_17Range | Ivar3_Avg | Ivar3_Var | Ivar3_Range | Ivar3_17Avg | Ivar3_17Var | Ivar3_17Range |
| 1 | 0.210 | 1.973 | 0.286 | 0.205 | 1.828 | 0.281 | 0.164 | 1.431 | 0.138 | 0.158 | 1.073 | 0.100 | 0.201 | 2.046 | 0.192 | 0.197 | 1.837 | 0.171 |
| 2 | 0.193 | 1.365 | 0.198 | 0.188 | 1.285 | 0.185 | 0.191 | 1.666 | 0.268 | 0.188 | 1.408 | 0.222 | 0.213 | 1.944 | 0.266 | 0.210 | 1.636 | 0.229 |
| 3 | 0.200 | 1.808 | 0.306 | 0.200 | 1.830 | 0.276 | 0.154 | 1.042 | 0.148 | 0.154 | 1.120 | 0.124 | 0.192 | 1.167 | 0.204 | 0.192 | 1.175 | 0.177 |
| 4 | 0.202 | 1.329 | 0.231 | 0.186 | 1.255 | 0.193 | 0.170 | 1.472 | 0.237 | 0.155 | 1.140 | 0.174 | 0.199 | 1.770 | 0.252 | 0.185 | 1.584 | 0.250 |
| 5 | 0.188 | 1.408 | 0.237 | 0.189 | 1.370 | 0.240 | 0.160 | 0.947 | 0.154 | 0.161 | 0.852 | 0.133 | 0.169 | 1.053 | 0.190 | 0.170 | 1.043 | 0.178 |
| 6 | 0.205 | 1.858 | 0.255 | 0.197 | 1.629 | 0.212 | 0.230 | 2.381 | 0.399 | 0.221 | 2.221 | 0.371 | 0.173 | 1.281 | 0.193 | 0.166 | 1.089 | 0.167 |
| 7 | 0.175 | 1.846 | 0.283 | 0.175 | 1.767 | 0.275 | 0.133 | 0.911 | 0.162 | 0.133 | 0.835 | 0.105 | 0.171 | 1.564 | 0.224 | 0.172 | 1.431 | 0.209 |
| 8 | 0.193 | 1.947 | 0.205 | 0.196 | 1.922 | 0.186 | 0.145 | 1.336 | 0.171 | 0.148 | 1.198 | 0.141 | 0.164 | 1.691 | 0.199 | 0.168 | 1.564 | 0.130 |
| 9 | 0.163 | 1.404 | 0.174 | 0.168 | 1.257 | 0.142 | 0.154 | 1.161 | 0.189 | 0.159 | 1.112 | 0.149 | 0.141 | 1.133 | 0.155 | 0.148 | 0.969 | 0.134 |
| 10 | 0.201 | 1.776 | 0.321 | 0.199 | 1.631 | 0.290 | 0.177 | 1.829 | 0.191 | 0.175 | 1.476 | 0.161 | 0.178 | 1.637 | 0.210 | 0.178 | 1.454 | 0.203 |
| 11 | 0.221 | 1.732 | 0.247 | 0.218 | 1.598 | 0.255 | 0.211 | 1.254 | 0.157 | 0.209 | 1.171 | 0.125 | 0.161 | 1.046 | 0.151 | 0.160 | 0.894 | 0.113 |
| 12 | 0.159 | 1.303 | 0.200 | 0.163 | 1.237 | 0.193 | 0.188 | 2.080 | 0.316 | 0.192 | 1.911 | 0.312 | 0.148 | 0.960 | 0.127 | 0.154 | 0.927 | 0.109 |
| 13 | 0.160 | 1.684 | 0.189 | 0.165 | 1.255 | 0.161 | 0.164 | 1.426 | 0.171 | 0.168 | 1.582 | 0.150 | 0.165 | 1.566 | 0.207 | 0.169 | 1.435 | 0.196 |

In the table:

$I_{var1\_Avg}$ — refers to the average of the 30min current variation values for electrode 1 over a 24hr period

$I_{var1\_Var}$ — refers to the variation in the calculated 30min current variation values over the 24 hour period (calculated using equation 5).

$I_{var1\_Range}$ — refers to the range of the current variation in electrode 1 (i.e. the maximum calculated current variation calculated minus the minimum current calculated variation);

$I_{var1\_17Avg}$ — refers to the average of the 30min adjusted current variation values in electrode 1 (each calculated using equation 4) over a 24 hour period.

$I_{var1\_17Var}$ — refers to the variation in the 30min adjusted current variation values (calculated using equation 5) over the 24 hour period for electrode 1.

$I_{var1\_17Range}$ refers to the range of the adjusted current variation value in electrode 1 (i.e. the maximum adjusted current variation value minus the minimum adjusted current variation value);

It should be appreciated that the same general definitions/references also apply to the six columns under electrodes 2 and 3, respectively.

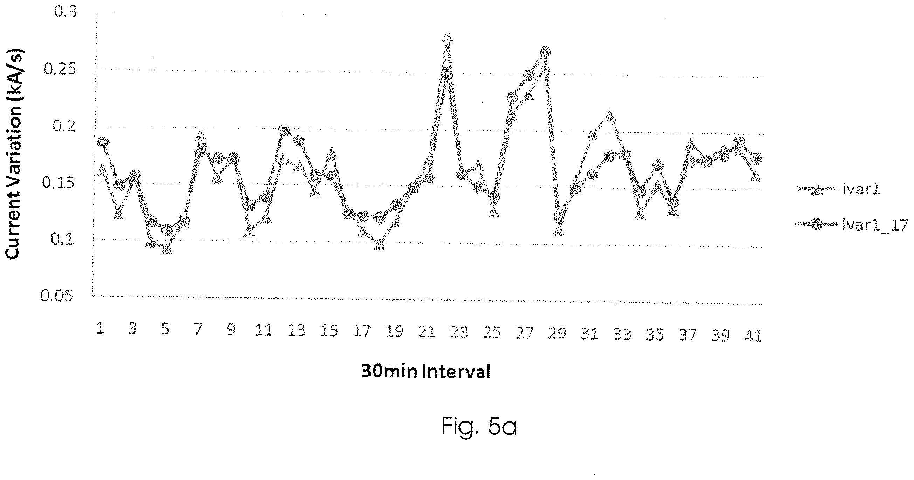

Whenever the adjusted state current variation model outperformed the normal measurement (in terms of fluctuation), the cell in Table 1 is colored grey. In roughly 94% of the cases the adjusted state current variation model decreased the amount of fluctuations observed within the data. Figure 5a shows the actual current variation values for the 13th day of the experiment, as well as the adjusted current variation values for the same intervals.

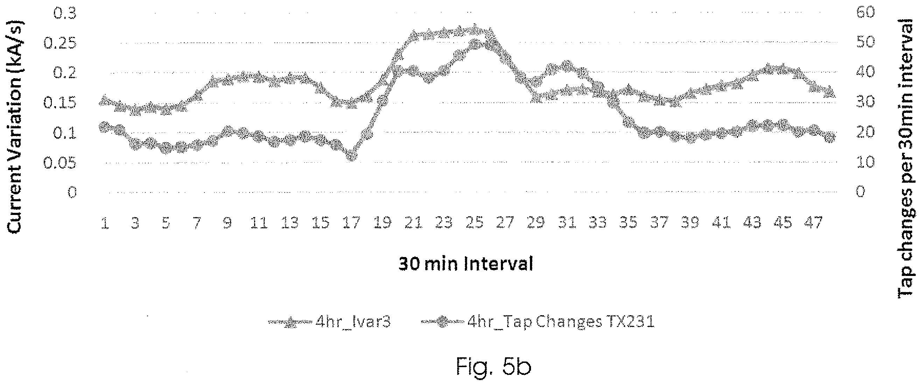

Figure 5b provides a graphical illustration of the effect of increased/decreased tap changes on normal current variation (4hr_$I_{var3}$). To remove some of the noise, a 4hr running average was used on the 30min-interval data (electrode 3 was used in this example). It should be clear that the amount of tap changes has a significant effect on the normal current variation value.

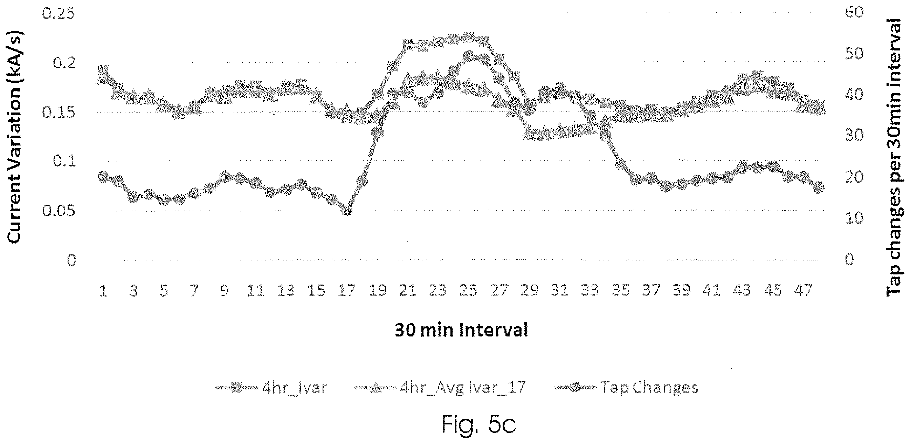

Figure 5c illustrates the working of the adjusted state current variation model (4hr_Avg $I_{var\_17}$). As the amount of tap changes increase, the normal current variation value is forced downwards (i.e. via the adjusted state current variation model) to compensate for the increased tap actions - which results in fewer fluctuations and a narrower operating range.

The adjusted state current variation model, which implements the correlation between the amount of tap changes and current variation, therefore improved the accuracy and reliability of the current variation value.

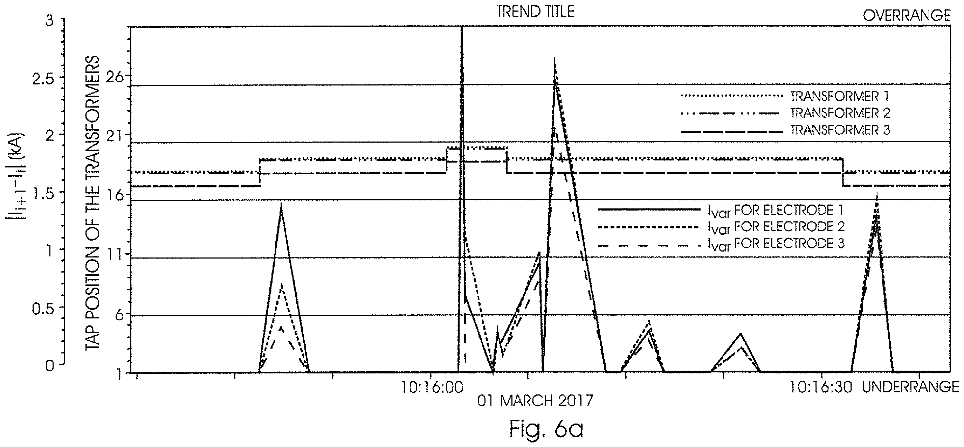

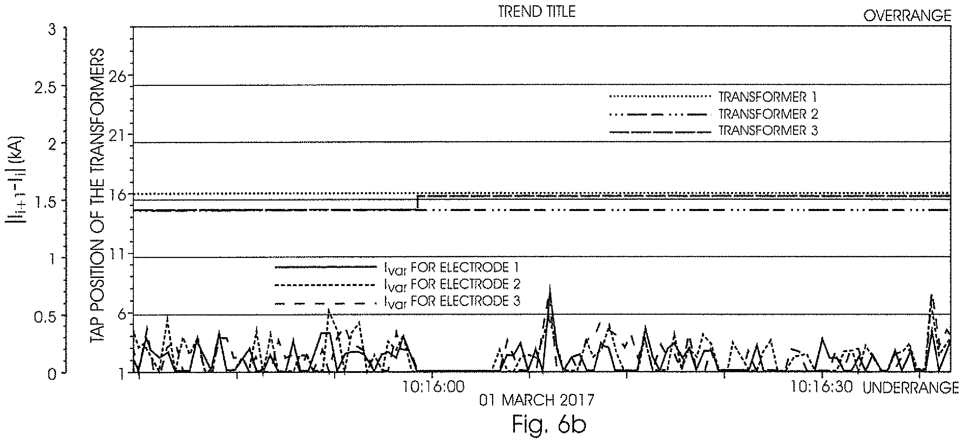

In another example, the instances where tap changes take place can be disregarded/removed from the calculations, in order to help improve the accuracy of the derived/calculated current variation value or the adjusted state current variation values. The system 10 may therefore be configured to remove/disregard data obtained during a tap change, when calculating a current variation value(s). In an alternative example, the system 10 may be configured to not take/log/process current measurements during a tap change. More specifically, the computer 24 or PLC may be configured to not take/log/process current measurements during a tap change. For example an execution of a program stored on the computer 24 or PLC, which implements the calculations, can be paused, while a tap change is occurring. Reference is in this regard specifically made to Figures 6a and 6b. Figure 6a shows the effect tap changes have on an absolute difference between subsequent electrode current values ($|I_{i+1}-I_i|$).Figure 6b, on the other hand, shows how the effect of tap changes on the absolute difference between subsequent electrode current values ($|I_{i+1}-I_i|$) can be reduced.

From the above it is clear that this invention is particularly useful for identifying electrode lengths. It clearly indicates breakages or tip losses. Possible reasons for furnace unbalances can be identified and proper corrective actions be taken. Very long electrodes are also prone to operate at very low electrode current values, which historically caused a lot of confusion regarding length. This invention can then be used to determine whether the low electrode currents are due to long electrodes or not.

Accurate control of the relative length of individual electrodes and ultimately significant improvement in the accuracy of locus of electrode arc points gives direct rise to:

- Improvement in the radial and axial distribution of thermal energy throughout the cylindrical or rectilinear geometry of the high temperature reactor volume;
- Maximization of the available viable volume within the high temperature furnace reactor in which to conduct the high temperature reaction, offering improved metallurgical recovery efficiency and throughput benefits;
- An improved and less varying thermal profile in a baking zone of electrodes, which makes the electrodes more resilient to breakages.

The invention provides a significant reduction in the macroscopic movement of electrode elements, with a corresponding decrease in levels of induced mechanical and thermal stress. This results in significantly decreased mechanical and chemical wear rates (e.g.an aggregated reduction of over 15%).

Improved overall metallurgical process stability is provided as a result of the above stated advantages, thereby yielding superior recovery of target element species to their designated respective phases and a corresponding reduction in undesirable (or tramp) element species distribution to the target reaction phases of value.

**Claims**

1. A method of monitoring, or obtaining an indication of, the length of an electrode of an arc smelting system (10), wherein the method includes:

   measuring the current in/running through the electrode during operation;
   determining, by using a processor, the variation of the measured current over a period of time;
   deriving, by using a processor, a current variation value which is indicative of the electrode length, wherein the derivation of the current variation value is based on at least the determined variation of current over the period of time.

2. The method of claim 1, which is for monitoring the lengths of, or obtaining an indication of the lengths of, two electrodes of an arc smelting system (10), wherein the method includes:

   measuring the current in each electrode during operation;
   determining the variation of the measured current for each electrode over a period of time;
   deriving a current variation value for each electrode, wherein the derivation of the current variation value is based on at least the determined variation of current for the particular electrode over the period of time.

3. The method of claim 1 which includes comparing, by using a processor, the derived current variation value with a reference current variation value, in order to obtain an indication of the electrode length.

4. The method of claim 3, wherein the reference current variation value is a current variation value for an electrode with a known length.

5. The method of claim 3, which includes
   measuring the current in the electrode at specific time instances/intervals over a period of time; and determining, by using a processor, the variation in current by calculating the difference in current measured at successive time instances/intervals.

6. The method of claim 5, wherein the derived current variation value is calculated by using the following formula:

$$Ivar = \frac{\sum_{i=0}^{n}|I_{i+1} - I_i|}{(t_n - t_0)}$$

   wherein:

   $Ivar$ is the derived current variation value;
   $n$ is the total amount of data points from which the derived current variation value is to be calculated;
   $I_i$ is the measured current at time interval/instance i; and
   $t_n$-$t_0$ refers to the time span/period over which the data points were recorded.

7. An arc smelting system (10) which includes:

   at least one electrode;
   a current measuring arrangement which is configured to measure the current in the electrode during operation; and **characterised by**
   a processing arrangement which is configured to determine the variation of the current in the electrode measured by the current measuring arrangement over a period of time, and derive a current variation value which is indicative of the length of the electrode, wherein the derivation of the current variation value is based on at least the determined variation of current over the period of time.

8. The system (10) of claim 7, which includes two electrodes.

9. The system (10) of claim 8, wherein the current measuring arrangement is configured to measure the current in each electrode during operation.

**10.** The system (10) of claim 9, wherein the processing arrangement is configured to

determine the variation of the measured current for each electrode over a period of time; and
derive a current variation value for each electrode which is indicative of the length of the electrode, wherein the
derivation of the current variation value is based on at least the determined variation of current over the period
of time.

**11.** The system (10) of claim 7, wherein the processing arrangement is configured to identify/determine a change in
electrode length of the electrode by comparing the derived current variation value with a reference current variation
value.

**12.** The system (10) of claim 7, wherein the current measuring arrangement is configured to measure the current in the
electrode at specific time instances/intervals over a period of time.

**13.** The system (10) of claim 12, wherein the processing arrangement is configured to determine the difference/amount
of variation in current by calculating the difference in current measured at successive time instances/intervals.

**14.** The system (10) of claim 7, wherein the system (10) is a ferrochrome smelter.

**15.** The system (10) of claim 7, wherein the system (10) is an electric arc furnace.


**Patentansprüche**

**1.** Verfahren des Überwachens oder des Erhaltens einer Anzeige der Länge einer Elektrode eines Lichtbogenschmelzsystems (10), wobei das Verfahren aufweist:

Messen des hineinfließenden/hindurchfließenden Stroms der Elektrode während des Betriebs;
Bestimmen mittels eines Prozessors der Änderung des gemessenen Stroms über einen Zeitraum;
Ableiten unter Verwendung eines Prozessors eines Stromänderungswerts, der die Elektrodenlänge anzeigt,
wobei die Ableitung des Stromänderungswerts auf wenigstens der bestimmten Änderung des Stroms über den
Zeitraum basiert.

**2.** Verfahren nach Anspruch 1, das zum Überwachen der Längen oder dem Erhalten einer Anzeige der Längen von
zwei Elektroden eines Lichtbogenschmelzsystems (10) dient, wobei das Verfahren aufweist:

Messen des Stroms in einer jeden Elektrode während des Betriebs;
Bestimmen der Variation des gemessenen Stroms für jede Elektrode über einen Zeitraum;
Ableiten eines Stromänderungswerts für jede Elektrode, wobei die Ableitung des Stromänderungswerts auf
wenigstens der bestimmten Änderung des Stroms für die bestimmte Elektrode über den Zeitraum basiert.

**3.** Verfahren nach Anspruch 1, das das Vergleichen mittels eines Prozessors des abgeleiteten Stromänderungswerts
mit einem Referenzstromänderungswert aufweist, um eine Anzeige der Elektrodenlänge zu erhalten.

**4.** Verfahren nach Anspruch 3, wobei der Referenzstromänderungswert ein Stromänderungswert für eine Elektrode
mit einer bekannten Länge ist.

**5.** Verfahren nach Anspruch 3, das aufweist
Messen des Stroms in der Elektrode an spezifischen Zeitpunkten/Zeitabständen über einen Zeitraum; und
Bestimmen mittels eines Prozessors der Änderung im Strom durch Berechnen der Differenz im Strom, der an
aufeinanderfolgenden Zeitpunkten/Zeitabständen gemessen wird.

**6.** Verfahren nach Anspruch 5, wobei der abgeleitete Stromänderungswert durch die folgende Formel berechnet wird

$$Ivar = \frac{\sum_{i=0}^{n}|I_{i+1} - I_i|}{(t_n - t_0)}$$

wobei

*Ivar* der abgeleitete Stromänderungswert ist;

*n* der Gesamtbetrag der Datenpunkte ist, aus denen der abgeleitete Stromänderungswert zu berechnen ist;

$I_i$ der gemessene Strom zum Zeitabstand/Zeitpunkt *i* ist, und

$t_n$-$t_0$ sich auf die Zeitspanne/den Zeitraum bezieht, über den die Datenpunkte aufgezeichnet wurden.

7. Lichtbogenschmelzsystem (10), das aufweist:

wenigstens eine Elektrode;

eine Strommessanordnung, die ausgestaltet ist, den Strom in der Elektrode während des Betriebs zu messen; und

**gekennzeichnet durch**

eine Verarbeitungsanordnung, die ausgestaltet ist, um die Änderung des Stroms in der Elektrode zu bestimmen, die von der Strommessanordnung über einen Zeitraum gemessen wurde, und einen Stromänderungswert abzuleiten, der die Länge der Elektrode anzeigt, wobei die Ableitung des Stromänderungswerts auf wenigstens der bestimmten Änderung des Stroms über den Zeitraum basiert.

8. System 10) nach Anspruch 7, das zwei Elektroden aufweist.

9. System (10) nach Anspruch 8, wobei die Strommessanordnung ausgestaltet ist, den Strom in einer jeden Elektrode während des Betriebs zu messen.

10. System (10) nach Anspruch 9, wobei die Verarbeitungsanordnung ausgestaltet ist, die Variation des gemessenen Stroms für jede Elektrode über einen Zeitraum zu messen; und einen Stromänderungswert für jede Elektrode abzuleiten, der die Länge der Elektrode anzeigt, wobei die Ableitung des Stromänderungswerts auf der bestimmten Änderung des Stroms über den Zeitraum basiert.

11. System (10) nach Anspruch 7, wobei die Verarbeitungsanordnung ausgestaltet ist, eine Änderung in der Elektrodenlänge der Elektrode zu identifizieren/bestimmen, indem der abgeleitete Stromänderungswert mit einem Referenzstromänderungswert verglichen wird.

12. System (10) nach Anspruch 7, wobei die Strommessanordnung ausgestaltet ist, den Strom in der Elektrode an bestimmten Zeitpunkten/Zeitabständen über einen Zeitraum zu messen.

13. System (10) nach Anspruch 12, wobei die Verarbeitungsanordnung ausgestaltet ist, die Differenz/den Änderungsbetrag des Stroms durch Berechnen der Differenz im Strom zu bestimmen, der an aufeinanderfolgenden Zeitpunkt/Zeitabständen gemessen wurde.

14. System (10) nach Anspruch 7, wobei das System (10) ein Ferrochromschmelzer ist.

15. System (10) nach Anspruch 7, wobei das System (10) ein Elektrolichtbogenofen ist.

**Revendications**

1. Procédé de surveillance ou d'obtention d'une indication de la longueur d'une électrode d'un dispositif de fusion à arc (10), dans lequel le procédé comporte :

la mesure du courant entrant/passant par l'électrode au cours du fonctionnement ;

la détermination, en utilisant une unité de traitement, de la variation du courant mesuré sur une période de temps ;

la déduction, en utilisant une unité de traitement, d'une valeur de variation de courant qui est représentative de la longueur d'électrode,

dans lequel la déduction de la valeur de variation de courant est basée au moins sur la variation de courant déterminée sur la période de temps.

2. Procédé selon la revendication 1, qui est destiné à surveiller les longueurs ou à obtenir une indication des longueurs de deux électrodes d'un dispositif de fusion à arc (10),

dans lequel le procédé comporte :

la mesure du courant sur chaque électrode au cours du fonctionnement ;
la détermination de la variation du courant mesuré pour chaque électrode sur une période de temps ;
la déduction d'une valeur de variation de courant pour chaque électrode, dans lequel la déduction de la valeur de variation de courant est basée au moins sur la variation de courant déterminée pour l'électrode particulière sur la période de temps.

3. Procédé selon la revendication 1, qui comporte la comparaison, en utilisant une unité de traitement, de la valeur de variation de courant déduite avec une valeur de variation de courant de référence, dans le but d'obtenir une indication de la longueur d'électrode.

4. Procédé selon la revendication 3, dans lequel la valeur de variation de courant de référence est une valeur de variation de courant pour une électrode présentant une longueur connue.

5. Procédé selon la revendication 3, qui comporte :

la mesure du courant dans l'électrode à des moments/intervalles de temps spécifiques sur une période de temps ; et
la détermination, en utilisant une unité de traitement, de la variation sur le courant en calculant la différence sur le courant mesuré à des moments/intervalles de temps successifs.

6. Procédé selon la revendication 5, dans lequel la valeur de variation de courant déduite est calculée en utilisant la formule suivante :

$$Ivar = \frac{\sum_{i=0}^{n}|I_{i+1} - I_i|}{(t_n - t_0)}$$

dans laquelle :

$Ivar$ représente la valeur de variation de courant déduite ;
n représente le nombre total de points de données à partir desquels la valeur de variation de courant déduite doit être calculée ;
$I_i$ représente le courant mesuré à un intervalle de temps/moment i ; et
$t_n$-$t_0$ se réfère à la durée/période de temps sur laquelle les points de données sont enregistrés.

7. Dispositif de fusion à arc (10) qui comporte :

au moins une électrode ;
un agencement de mesure de courant qui est configuré de manière à mesurer le courant dans l'électrode au cours du fonctionnement ; et **caractérisé par**
un agencement de traitement qui est configuré de manière à déterminer la variation du courant dans l'électrode mesuré par l'agencement de mesure de courant sur une certaine période de temps, et à déduire une valeur de variation de courant qui est représentative de la longueur de l'électrode, dans lequel la déduction de la valeur de variation de courant est basée au moins sur la variation déterminée du courant sur la période de temps.

8. Dispositif (10) selon la revendication 7, qui comporte deux électrodes.

9. Dispositif (10) selon la revendication 8, dans lequel l'agencement de mesure de courant est configuré de manière à mesurer le courant sur chaque électrode au cours du fonctionnement.

10. Dispositif (10) selon la revendication 9, dans lequel l'agencement de traitement est configuré de manière à déterminer la variation du courant mesuré pour chaque électrode sur une période de temps ; et
à déduire une valeur de variation de courant pour chaque électrode qui est représentative de la longueur de l'électrode, dans lequel la déduction de la valeur de variation de courant est basée au moins sur la variation de courant déterminée sur la période de temps.

**11.** Dispositif (10) selon la revendication 7, dans lequel l'agencement de traitement est configuré de manière à identifier/déterminer une variation de la longueur d'électrode de l'électrode en comparant la valeur de variation de courant déduite à une valeur de variation de courant de référence.

**12.** Dispositif (10) selon la revendication 7, dans lequel l'agencement de mesure de courant est configuré de manière à mesurer le courant dans l'électrode à des moments/intervalles de temps spécifiques sur une période de temps.

**13.** Dispositif (10) selon la revendication 12, dans lequel l'agencement de traitement est configuré de manière à déterminer la différence/valeur de variation sur le courant en calculant la différence sur le courant mesuré à des moments/intervalles de temps successifs.

**14.** Dispositif (10) selon la revendication 7, dans lequel le dispositif (10) est un dispositif de fusion pour ferro-chrome.

**15.** Dispositif (10) selon la revendication 7, dans lequel le dispositif (10) est un four à arc électrique.

10

22

20.1

MAIN POWER SUPPLY (e.g. 33kV)-
EITHER CONNECTED IN STAR OR
DELTA CONFIGURATION (Y-Δ)

11.1

14.1

11.2

11.3    14.2

16.1  16.2

16.3

0-5A / 4-20mA

CONNECTED IN DELTA ( Δ )

CHANNEL 1
19.1

20.2

0-5A / 4-20mA

CHANNEL 2
19.2

20.3

0-5A / 4-20mA

CHANNEL 3
19.3

14.3

12.1   12.12   12.3

TRANSFORMER TAP
CHANGER LINK

ANALOG
TO DIGITAL

ETHERNET
CONNECTION

24

TO FURNACE ELECTRODES
CONNECTED IN DELTA ( Δ )

Fig. 1

Fig. 2a

Fig. 2b

$I_{var}$ vs. R (Electrode 1)

Y=4.2131x + 2.4874
$R^2$=0.0395

E1 ——— Linear (E1)

Fig. 3a

Fig. 3b

Fig. 3C

Fig. 4a

ΔVar2 vs ΔTX123

$Y=0.0016x + 0.0011$
$R^2=0.2004$

ΔCurrent Variation (kA/s)

ΔTap Changes

Fig. 4b

Fig. 4c

Fig. 5a

Fig. 5b

Fig. 5c

Fig. 6a

Fig. 6b

EP 3 446 545 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7095777 B
- US 3872231 A
- US 6178191 B

- JP S57130398 A
- CN 101720146 B

**Non-patent literature cited in the description**

- **HOCKADAY, C.** *Electrode length determinator [Interview,* 29 December 2015